# EUROPEAN PATENT SPECIFICATION

(11) **EP 1 257 038 B1**
(45) Date of publication and mention of the grant of the patent: **12.09.2018**
(21) Application number: 00966453.3
(22) Date of filing: 12.10.2000
(51) Int. Cl.: H02K 1/27, H02K 7/14, H02P 6/18, F04B 35/04

(54) **COMPRESSOR**
KOMPRESSOR
COMPRESSEUR

(30) Priority: 13.10.1999 JP 29163599
(43) Date of publication of application: 13.11.2002
(73) Proprietor: DAIKIN INDUSTRIES, LTD., Osaka-shi, Osaka 530-8323 (JP)
(72) Inventor: YAMAGIWA, Akio C/O Daikin Industries, Ltd., Kusatsu-shi Shiga 525-0044 (JP)
(74) Representative: Prüfer & Partner mbB Patentanwälte · Rechtsanwälte
(86) International application number: PCT/JP2000/007097
(87) International publication number: WO 2001/028072

(56) References cited:
- EP-A1- 0 758 816
- JP-A- 6 303 752
- JP-A- 9 093 845
- JP-A- 9 121 485
- JP-A- 9 168 247
- JP-A- 9 191 698
- JP-A- 11 146 685
- JP-A- 11 230 626
- JP-A- H05 211 796
- JP-A- H10 288 180
- JMA TECHNO-FRONTIER WEEK: "JMA Techno-Frontier Week 96 Japan", JMA TECHNO-FRONTIER WEEK 96, 17 April 1996 (1996-04-17), pages B-4-2-1-B-4-2-12, XP055318551, Japan
- IEE JAPAN: "IEE Japan, Vol 114-D, No 9, 1994", IEE JAPAN, NO 9,1994, 1 January 1994 (1994-01-01), pages 824-832, XP055318057,

## Description

### Technical Field

The present invention relates to a compressor. More particularly, the present invention relates to a compressor, which employs a brush-less DC motor as a driving source.

### Related Art

From the past, for the purpose of preventing increase in temperature of the earth, reduction of greenhouse effect gas and restriction of domestic HFC (hydrogen, fluorine, carbon) are accelerated since the international conference for preventing increase in temperature (Kyoto conference: COP3). A product with a low GWP (GWP is a coefficient for increasing temperature of the earth under the assumption of CO2=1), high efficiency, and high heating capacity is desired as an air conditioning device. That is, an air conditioning device is needed in which a compressor with high efficiency, and high heating capacity using refrigerant with low GWP is mounted. Description is further made.

In a conventional air conditioning device, R22 (GWP coefficient: 1500), R410A (GWP coefficient: 1730), R407C (GWP coefficient: 1530) or the like is used as refrigerant. However, those GWP coefficients are greater than 1000, so that those refrigerant are disadvantageous in promotion of increase prevention in temperature of the earth.

Ammonia (GWP coefficient: 0), propane (GWP coefficient: 3) or the like are made practicable as refrigerant having small GWP coefficient. Ammonia has toxicity, while propane has highly flammable characteristic, so that they are not suitable as refrigerant for a popular air conditioning device because they can be used at limited location.

Therefore, R32 (GWP coefficient: 650) attract attention as refrigerant with low GWP coefficient, without toxicity and highly flammable characteristic.
When R32 is employed as refrigerant, however, a sending out refrigerant temperature of a compressor becomes higher in comparison to that of a compressor employing R22, R410A, or R407C as refrigerant (specifically, sending out refrigerant temperature of a compressor becomes higher by 19 DEG C in comparison to that of a compressor employing R22, when compressor efficiency are nearly the same to one another). A disadvantage arises in that compressor efficiency becomes lowered, accordingly.
From JP 11-230626 A, a compressor can be taken which uses CH₂F₂ as a single refrigerant or CH₂F₂ as a rich mix refrigerant in which CH₂F₂ exceeds 50%.
From JP 11-146685 A a compressor can be taken which uses a controller of a DC brush-less motor.
JP 10 288 180 A discloses a compressor having a brush-less DC motor including a rotor having rare earth magnets. Other compressors are known from:
JP 10 288180 A; JP H05 21 1796 A;
JMA TECHNO-FRONTIER WEEK: "JMA Techno-Frontier Week 96 Japan", 17 April 1996, pages B-4-2-1-B-4-2-12, XP055318551, Japan;
IEE JAPAN: "IEE Japan, Vol 114-D, No 9, 1994"; IEE JAPAN, NO 9,1994, 1 January 1994 (1994-01-01), pages 824-832, XP05531 8057.
The present invention is made in view of the above problems. It is an object of the present invention to offer a compressor, which employs refrigerant with low GWP, and having high safety, and which realizes improvement in efficiency and suppression in increase in sending out refrigerant temperature of a compressor, and in which high temperature demagnetization of the magnets is prevented.

### Disclosure of the Invention

This object is solved by a compressor which is defined in the independent claim 1. Preferred developments of the invention are defined in the dependent claims.

When the compressor of claim 1 is employed, R32 single refrigerant, or R32 rich mixed refrigerant in which R32 exceeds 50% and which has sending out refrigerant temperature higher than that of R22 is employed as refrigerant, and a brush-less DC motor is employed as a driving source. Therefore, lowering in compressor efficiency and increase in sending out refrigerant temperature of a compressor (increase in temperature within a compressor) are brought by employing the above refrigerant. But, the lowered quantity in compressor efficiency is compensated by the high efficiency of the brush-less DC motor, so that a compressor with high efficiency is realized. In addition, increase in sending out refrigerant temperature of a compressor is suppressed by decreasing losses in a driving source due to employment of a brush-less DC motor.

When the compressor of claim 1 is employed, a brush-less DC motor including a rotor having rare earth magnets is employed as the brush-less DC motor. Therefore, field of a motor is increased due to magnetic force of a rare earth magnet which is great, so that a motor current is reduced, further improvement in compressor efficiency and further reduction in raising in sending out refrigerant temperature of a compressor are realized, accordingly.

When the compressor of claim 4 is employed, the compressor further comprises brush-less DC motor control means which drives the brush-less DC motor by advancing motor driving current phase more than motor induction voltage phase. Therefore, motor voltages are controlled to be equal to or less than the inverter voltage, operation range of a motor is enlarged, accordingly.

When the compressor of claim 2 is employed, the compressor further comprises an inverter for driving the brush-less DC motor, wherein a motor terminal voltage at the maximum rotation numbers is determined to be equal to or greater than an inverter output voltage. Therefore, motor voltages are controlled to be equal to or less than the inverter voltage, operation range of a motor is enlarged, accordingly.

When the compressor of claim 1 is employed, a brush-less DC motor having a rotor, which has permanent magnets, embedded therein, is employed as the brush-less DC motor. Therefore, a protection tube made of non-magnetic material for preventing magnets from scattering becomes unnecessary, permeance at magnet operation point is improved by making an air-gap between a rotor and a stator to be short. Further, the rare earth magnet can be strong against reduction field by dispersing reduction field from a stator, the rare earth magnet can be strong against high temperature demagnetization, accordingly.

When the compressor of claim 1 is employed, a brush-less DC motor having a rotor which has rare earth magnets embedded therein, is employed as the brush-less DC motor, and a thickness of the rare earth magnet is determined to satisfy a formula of Wm / (D^{1/3} X L) > 0.11 wherein a diameter of the rotor is D (m), a length of the rotor is L (m), and a thickness of the rare earth magnet is Wm (m). Therefore, demagnetization of magnet is prevented from generation.

When the compressor of claim 3 is employed, a brush-less DC motor having a rotor which has permanent magnets embedded therein and using magnet torque and reluctance torque together, is employed as the brush-less DC motor. Therefore, losses at high temperature are decreased, so that high efficiency operation is realized in which a torque / current ratio becomes great.

When the compressor of claim 5 is employed, the compressor further comprises an inverter for driving the brush-less DC motor, and rotational position sensor-less detection means for detecting a rotational position of the rotor of the brush-less DC motor based upon an induction voltage of the brush-less DC motor, and the compressor employs an inverter which operates based upon the rotational position detected by the rotational position sensor-less detection means. Therefore, detection of rotational position of a rotor is performed with high reliance and low cost, so that a brush-less DC motor is driven stably even when a condition is under high temperature and high pressure.

When the compressor of claim 5 is employed, the compressor further comprises an inverter for driving the brush-less DC motor, and rotational position sensor-less detection means for detecting a rotational position of the rotor of the brush-less DC motor based upon a neutral point signal of the brush-less DC motor, and the compressor employs an inverter which operates based upon the rotational position detected by the rotational position sensor-less detection means. Therefore, detection of rotational position of a rotor is performed without motor induction voltage, so that the detection is not affected by a conduction period when an inverter output voltage is applied to a motor, an output voltage phase extent is enlarged which can be controlled, accordingly.

When the compressor of claim 7 is employed, the compressor further comprises an inverter for driving the brush-less DC motor, and rotational position sensor-less detection means for detecting a rotational position of the rotor of the brush-less DC motor by carrying out predetermined operation using stator application voltages, motor currents, and equipment constants, and the compressor employs an inverter which operates based upon the rotational position detected by the rotational position sensor-less detection means. Therefore, detection of rotational position of a rotor is performed without motor induction voltage, so that the detection is not affected by a conduction period when an inverter output voltage is applied to a motor, an output voltage phase extent is enlarged which can be controlled, accordingly.

When the compressor of claim 6 is employed, the compressor further comprises a voltage-fed inverter for driving the brush-less DC motor, and rotational position sensor-less detection means for detecting a rotational position of the rotor of the brush-less DC motor from inductance obtained from higher harmonic current generated from the voltage-fed inverter and salient pole character of a rotor, and the compressor employs an inverter which operates based upon the rotational position detected by the rotational position sensor-less detection means. Therefore, detection of rotational position of a rotor is performed without motor induction voltage, so that the detection is not affected by a conduction period when an inverter output voltage is applied to a motor, an output voltage phase extent is enlarged which can be controlled, accordingly.

### Brief Description of the Drawings

Figure 1 is a vertical cross sectional view of a compressor of an embodiment according to the present invention;
Figure 2 is a horizontal cross sectional view of a motor section of the compressor illustrated in Fig. 1;
Figure 3 is a diagram useful in understanding flowing of refrigerant within the compressor illustrated in Fig. 1 and temperature distribution factor;
Figures 4(A) and 4(B) are diagrams illustrating motor efficiency and motor losses with respect to rotation number of a induction motor and brush-less DC motor;
Figure 5 is a diagram illustrating characteristics of a ferrite magnet;
Figure 6 is a diagram illustrating characteristics of a rare earth magnet;
Figure 7 is a diagram illustrating magnetic force lowering rates in high temperature of a ferrite magnet and a rare earth magnet;
Figures 8(A) and 8(B) are diagrams illustrating motor efficiency and motor losses with respect to rotation number of a brush-less DC motor employing ferrite magnets and brush-less DC motor employing rare earth magnets;
Figure 9 is a diagram illustrating demagnetization characteristics in high temperature of a rare earth magnet;
Figure 10 is a diagram illustrating a sending out temperature rate of a compressor with respect to a thickness rate of a magnet;
Figure 11 is a diagram illustrating a sending out temperature rate of a compressor with respect to magnet coercive force rate;
Figure 12 is a diagram illustrating a sending out temperature rate of a compressor with respect to magnet coercive force;
Figure 13 is a diagram illustrating an operation range of a brush-less DC motor in a case that phase advancing control is not carried out, in a case that phase advancing control is not carried out and magnet flux is changed, and in a case that phase advancing control is carried out;
Figure 14 is a diagram illustrating a motor terminal voltage with respect to rotation number in a case that phase advancing control is carried out;
Figure 15 is a diagram illustrating a motor driving current with respect to rotation number in a case that phase advancing control is carried out;
Figure 16 is a horizontal cross sectional view of a motor having magnet embedded structure;
Figures 17(A) and 17(B) are diagrams useful in understanding demagnetization fields each corresponding to a structure of a rotor;
Figure 18 is a diagram illustrating a magnet thickness coefficient with respect to a motor output;
Figure 19 is a diagram illustrating a motor torque with respect to a current phase;
Figure 20 is a diagram illustrating losses increasing rate with respect to a motor temperature;
Figure 21 is a diagram illustrating motor terminal voltages with respect to a rotation number of a motor having magnet surfaced structure and a motor having magnet embedded structure;
Figure 22 is a diagram illustrating motor torque with respect to a rotation number of a motor having magnet surfaced structure and a motor having magnet embedded structure;
Figure 23 is a diagram illustrating motor driving currents with respect to a rotation number of a motor having magnet surfaced structure and a motor having magnet embedded structure;
Figure 24 is a block diagram illustrating a sensor-less position signal circuitry of an example;
Figure 25 is an electric circuitry diagram illustrating a sensor-less position signal circuitry of an example which detects a rotational position of a rotor using a motor neutral point signal;
Figure 26 is a block diagram illustrating an arrangement of a speed control system of an example which calculates a rotational position of a rotor by carrying out a predetermined operation using a stator application voltage, motor driving current, and equipment constants of a brush-less DC motor;
Figure 27 is a diagram illustrating an analysis model of a brush-less DC motor; and
Figure 28 is a block diagram illustrating a system arrangement of an example which calculates a rotational position of a rotor by carrying out an operation from an inductance obtained from higher harmonic currents generated from a voltage-fed inverter and salient pole character of a rotor.

### Best Mode for Carrying Out the Invention

Hereinafter, referring to the attached drawings, we explain a compressor of embodiments in detail.

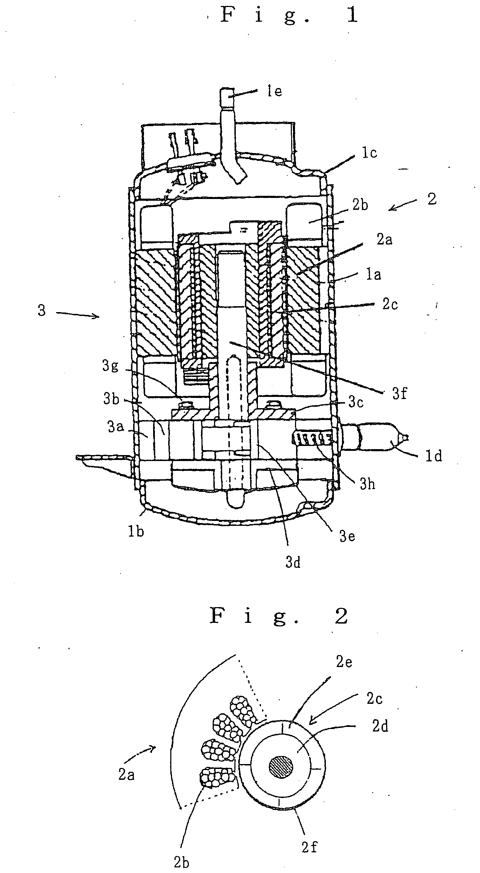

Fig. 1 is a vertical cross sectional view of a compressor of an embodiment according to the present invention, while Fig. 2 is a horizontal cross sectional view of a motor section of this compressor.

In this compressor, a bottom casing 1b is provided in one body to a bottom section of a main casing la having cylindrical shape, and a top casing 1c is provided in one body to a top section of the main casing 1a, so as to construct a sealed casing 1. A brush-less DC motor 2 and a compressor main body 3 are provided under a co-axial condition in the interior of the sealed casing 1. A suction opening member 1d is provided to a predetermined position of the main casing 1a, while a sending out opening member 1e is provided to a predetermined position of the top casing 1c. R32 single refrigerant, or R32 rich mixed refrigerant (refrigerant in which R32 exceeds 50 % and which has a sending out temperature which is higher than that of R22) is employed as refrigerant which is sucked, compressed, and sent out by the compressor main body 3. Specifically, refrigerant having a sending out temperature which is higher than that of R22 by about 10 °C, such as R32 / 125 (quantity of R32 is equal to or greater than 70 %), R32 / 134a (quantity of R32 is equal to or greater than 50 %), R32 / propane (quantity of R32 is equal to or greater than 80 %), and the like are exemplified as the R32 rich mixed refrigerant.

The brush-less DC motor 2 comprises a stator 2a, and a rotor 2c. The stator 2a has stator windings 2b, and is fixed to the main casing la. The rotor 2c has permanent magnets 2d on a surface of a rotor core 2d, and a magnet scattering prevention pipe 2f for preventing the permanent magnets 2e from scattering, and is provided rotatably in the interior of the stator 2a. Such a brush-less DC motor is called as a surface magnet structure motor.

The compressor main body 3 comprises a cylinder 3a, front head 3c, rear head 3d, a rotary piston 3e, and a crank shaft 3f. The cylinder 3a forms an inner space 3b therein, which operates as a compression chamber. The front head 3c and rear head 3d support the cylinder 3a in an axial direction. The rotary piston 3e is provided within the inner space 3b. The crank shaft 3f is engaged with the rotary piston 3e so as to realize connection with the rotor 2c. 3g represents a connection bolt which makes the cylinder 3a, front head 3c, and rear head 3d in one body.

The suction opening member 1d is provided in a penetrating condition through the main casing 1a so as to oppose to the cylinder 3a. The suction opening member 1d is communicated to a through hole 3h, which penetrates a side wall of the cylinder 3a.

When the compressor having the above arrangement is employed, lowering in compressor efficiency is brought due to employment of the above refrigerant. But, a lowered amount in compressor efficiency is compensated by an improved amount in efficiency of the brush-less DC motor, so that a compressor with high efficiency is realized. Further, increase in sending out temperature of a compressor is brought by employing the above refrigerant. But, increase in sending out temperature of a compressor is suppressed by decreasing losses in a motor due to employment of a brush-less DC motor having high efficiency.

The compressor is not limited to a compressor having a compression chamber of rotary-type mechanism.

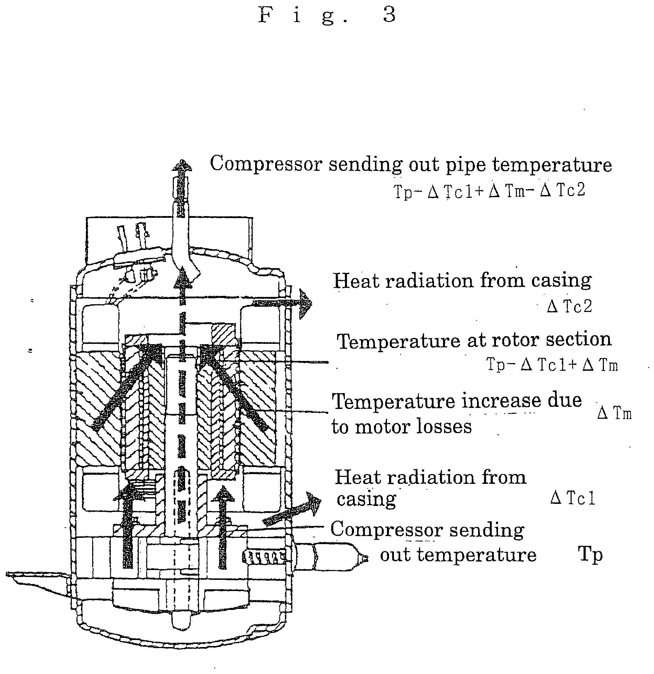

Fig. 3 is a diagram useful in understanding flowing of refrigerant (refer to a dashed arrow in Fig. 3) within the compressor illustrated in Fig. 1 and temperature distribution factors (refer to solid arrows in Fig. 3).

In Fig. 3, high pressure refrigerant obtained by compressing using the compressor main body 3 is added generated heat due to losses of the motor section, and is flowed towards the sending out opening member 1e, as is illustrated with the dashed arrow in Fig. 3. On a halfway of this flowing of the refrigerant, the temperature of the refrigerant is lowered to some degree by heat radiation of Δ Tc1 and Δ Tc2 from the casing. That is, when the sending out temperature from the compressor main body is assumed to be Tp, increase in temperature due to motor losses is assumed to be ΔTm, the refrigerant temperature near the rotor becomes Tp - ΔTc1 + ΔTm, while the refrigerant temperature at the sending out opening member becomes Tp - Δ Tc1 + ΔTm - ΔTc2. Therefore, it is needed to decrease ΔTm for suppressing increase in sending out temperature of a compressor.

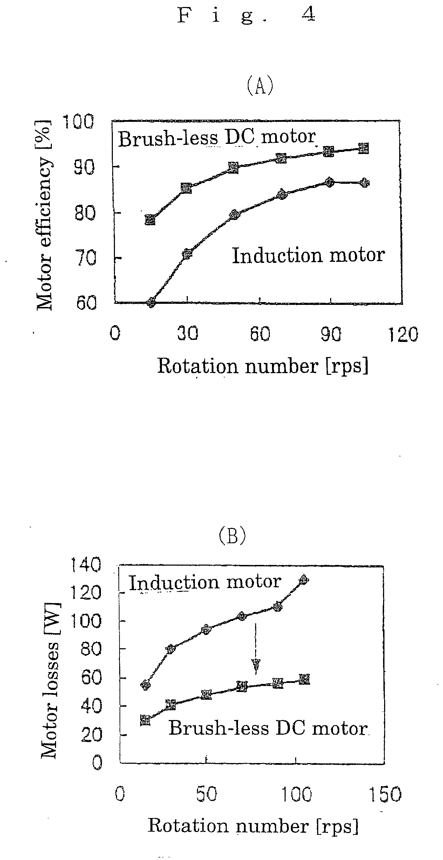

A brush-less DC motor has higher efficiency in comparison to an induction motor, as is illustrated in Fig. 4(A), thereby losses in the motor section is greatly improved, as is illustrated in Fig. 4(B). Therefore, ΔTm is greatly reduced by employing a brush-less DC motor, so that the interior of the compressor is prevented from increasing up to unnecessary high temperature. As a result, employing a brush-less DC motor lowers the interior temperature of the compressor.

It is preferable that ferrite magnets are employed as permanent magnets, which are mounted to a rotor of a brush-less DC motor, which is a driving source of the compressor of the above embodiment.

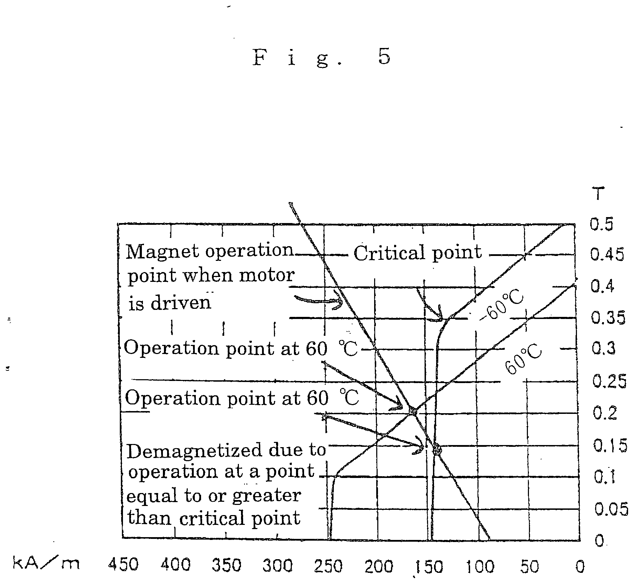

The ferrite magnet increases its coercive force following increase in temperature, as is illustrated in Fig. 5, so that permanent demagnetization at a high temperature is not generated (provided that equal to or less than Curie point).

Therefore, performance of the compressor is maintained even when the interior temperature of the compressor is increased.

It is also preferable that rare earth magnets are employed as permanent magnets, which are mounted to a rotor of a brush-less DC motor, which is a driving source of the compressor of the above embodiment. Wherein, the rare earth magnet is exemplified as Nd - B - Fe, and Sm - Co family magnet. Those may be sintered magnets, or bond magnets.

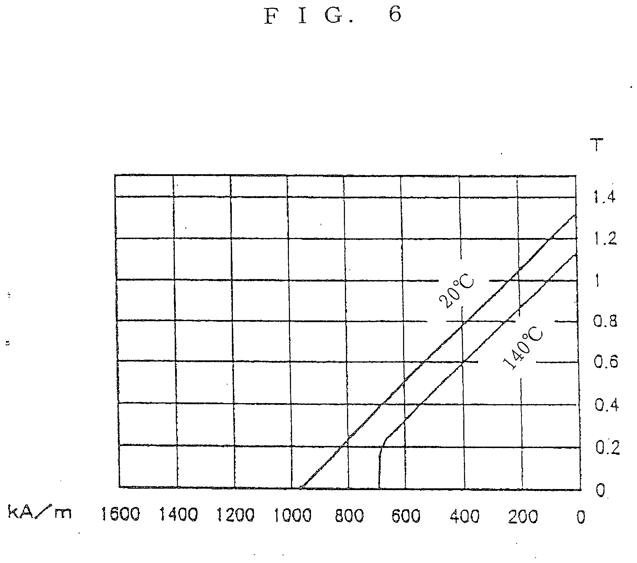

This rare earth magnet has a magnetic force, which is several times magnetic force of a ferrite magnet, as is understood by comparing Fig. 5 and Fig. 6. Therefore, a field of a motor can be determined to be greater than a case in which ferrite magnets are employed, when rare earth magnets are employed in a brush-less DC motor. Wherein, a generated torque of a motor is determined by (motor current) X (field due to magnet), so that a motor current can be decreased when a field becomes great.

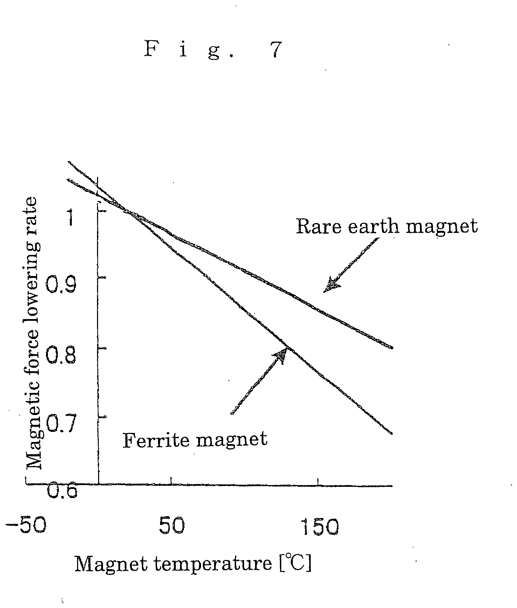

A rare earth magnet has smaller decrease in magnetic force than that of a ferrite magnet at a high temperature, as is illustrated in Fig. 7, so that decreasing amount in motor current is reduced even when a temperature is high.

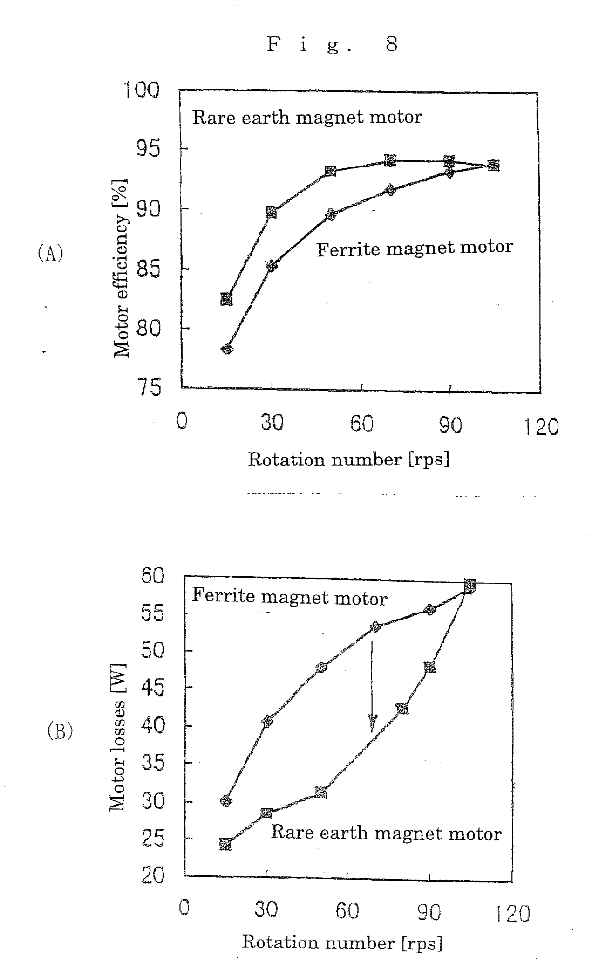

Therefore, copper loss which is a part of motor losses can be decreased, so that a brush-less DC motor with higher efficiency and lower losses can be realized {refer to Fig. 8(A)}. As a result; a compressor with higher efficiency can be realized. A sending out temperature of a compressor can be decreased further due to the fact that losses can be determined to be smaller, as is illustrated in Fig. 8(B).

It is preferable that a thickness of a permanent magnet made of rare earth magnet is determined to be greater than that of a permanent magnet which is employed in a case that R22, R410A, or R407C is employed as refrigerant. It is also preferable that a thickness of a permanent magnet made of rare earth magnet is 1.03 times of a thickness of a permanent magnet which is employed in a case R22, R410A, or R407C is employed as refrigerant.

It is also preferable that a thickness of a permanent magnet made of rare earth magnet is determined to be greater than a thickness of a magnet which is obtained from a sending out temperature rate of R32 single refrigerant, or R32 rich mixed refrigerant in which R32 exceeds 50% and which has sending out refrigerant temperature higher than that of R22 and R22 when a thickness of a permanent magnet is determined to be 1 which is employed in a case R22, R410A, or R407C is employed as refrigerant

Description is made in more detail.

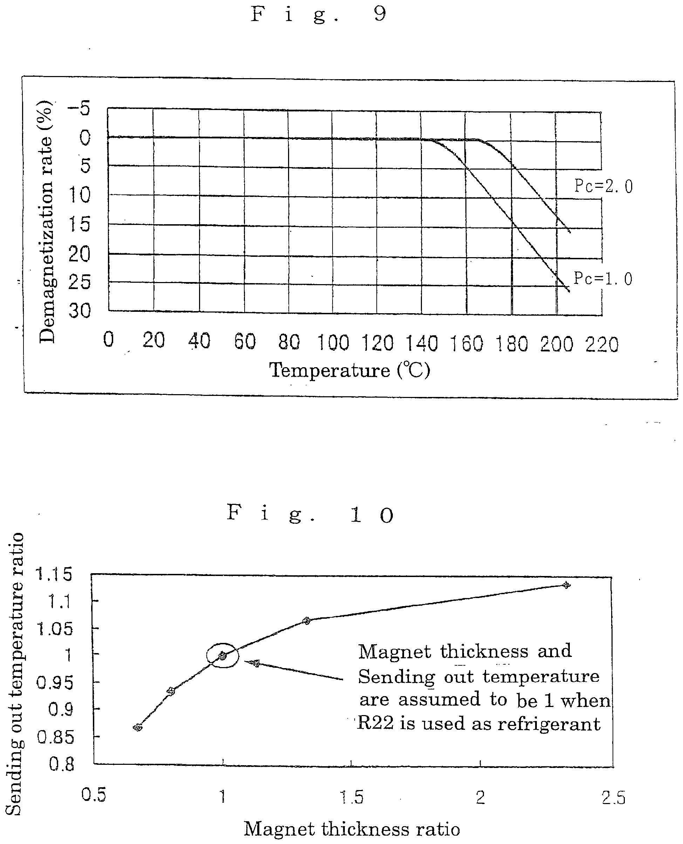

When a temperature in the interior of a compressor is increased more than that of the above case, demagnetization at high temperature which is characteristic to rare earth magnets is generated, as is illustrated in Fig. 9. Wherein, the demagnetization of rare earth magnets at high temperature is determined based upon material of magnet, a permeance coefficient (Pc) of a single magnet, and a motor winding current. Therefore, for improving high temperature demagnetization characteristics in a motor which has determined material of a magnet, surface area and a motor current, that is , in a motor which has determined a motor output, the rare earth magnet can be made to be strong against reduction field which increases a permeance coefficient of a single magnet, by increasing the thickness of a magnet, the rare earth magnet can be strong against high temperature demagnetization, accordingly (refer to Fig. 10).

It is preferable that rare earth magnets each determines J-magnet coercive force to be greater than 1 which force is determined by taking a sending out refrigerant temperature rate of R32 single refrigerant, or R32 rich mixed refrigerant in which R32 exceeds 50% and which has sending out refrigerant temperature higher than that of R22 and R22 into consideration, are employed as the permanent magnets made of rare earth magnets, when J-magnet coercive force of a permanent magnet which is employed in a case R22, R410A, or R407C is employed as refrigerant is supposed to be 1. It is also preferable that J-magnet coercive force (Hcj) is determined to be equal to or greater than 23 koe (183 kA/ m). In this specification, J-magnet coercive force corresponds to a magnetic polarization which is zero on a J - H demagnetization curve. J-magnet coercive force is represented with a symbol of Hcj, and with a unit of ampere per meter (A / m) (refer to JIS handbook).

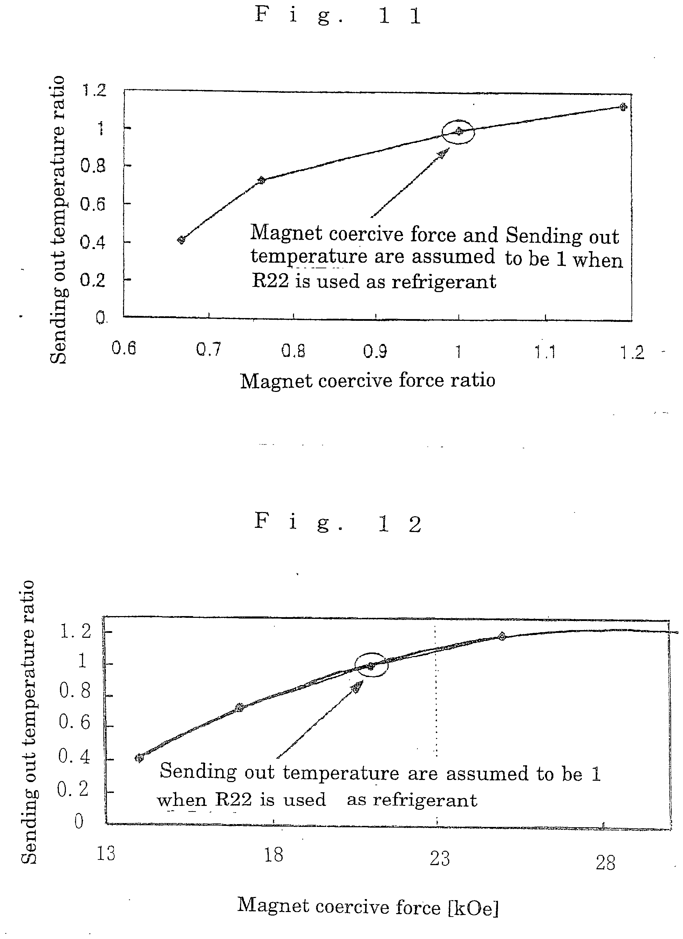

In this case, the rare earth magnet can be made to be strong against reduction field similarly to the case that a thickness of a magnet is, by increasing the J-magnet coercive force of a magnet, the rare earth magnet can be strong against high temperature demagnetization, accordingly (refer to Figs 11 and 12).

In those cases, it is preferable that a brush-less DC motor is driven so as to advance a motor driving current phase more than a motor induction voltage phase.

It is also preferable that a brush-less DC motor is driven so as to determine a motor terminal voltage at the maximum rotation number to be equal to or greater than an inverter output voltage.

Description is made in more detail.

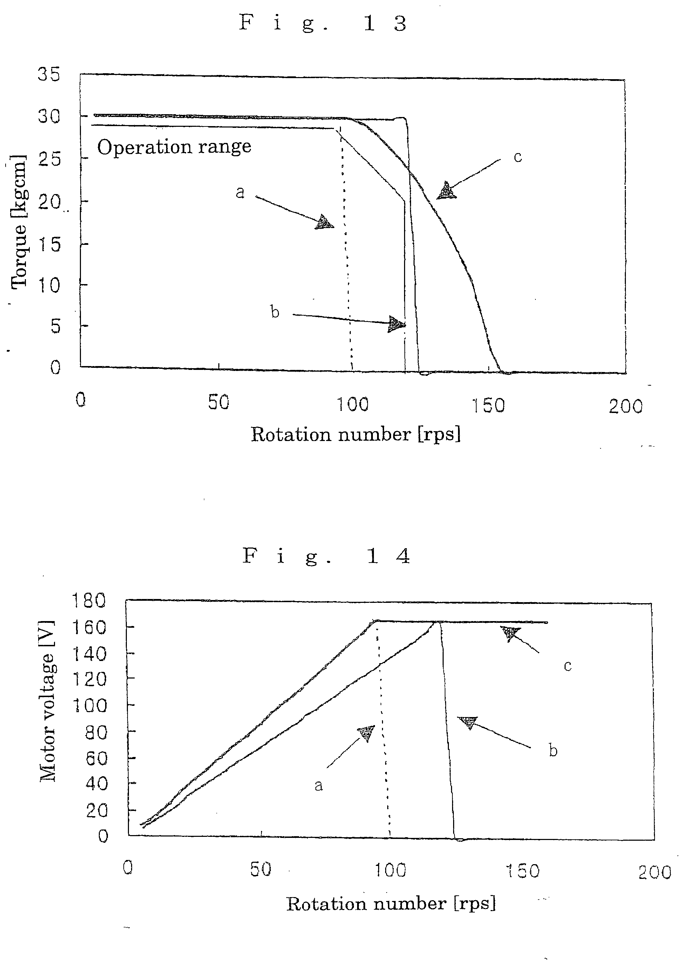

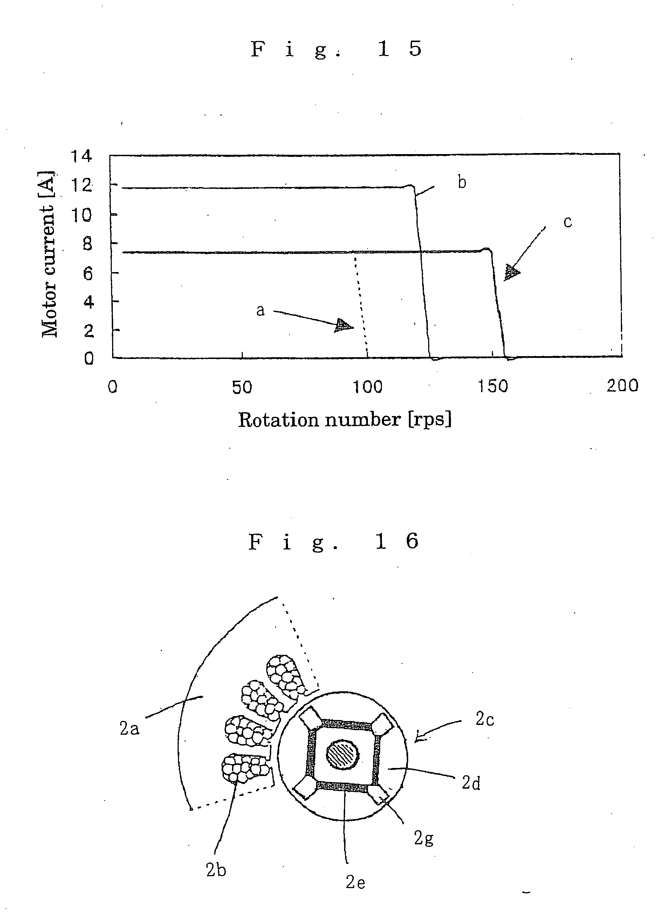

In a brush-less DC motor, a motor terminal voltage increases in proportion to a rotation number (rotation speed). And, the brush-less DC motor becomes impossible to be operated at rotation numbers at which the motor terminal voltage becomes greater than an inverter output voltage. As are illustrated with a in Fig. 13 and with a in Fig. 14, a motor does not satisfy the operation range, therefore some measures are required, which motor does not advance a phase of a motor driving current with respect to a phase of a motor induction voltage (without advancement). In the past, it is needed for satisfying the operation range that flux of the magnets are changed (in this case, the flux are reduced) and that the motor windings are reduced so as to lower the motor terminal voltages (refer to b in Fig. 13 and b in Fig. 14). When such measures are carried out, the motor currents greatly increase (refer to b in Fig. 15), especially when flux of the magnets are reduced.

But, when the brush-less DC motor is driven to advance the phase of the motor driving current with respect to the phase of the motor induction voltage, the motor terminal voltage can be controlled to be equal to or less than the inverter output voltage (refer to c in Fig. 14). The operation range of the brush-less DC motor can be enlarged, accordingly, so that the operation range of the compressor can be satisfied without increase in motor current (refer to c in Fig. 13 and c in Fig. 15).

It is preferable that a brush-less DC motor having a rotor, which has permanent magnets, embedded in the interior thereof is employed as the brush-less DC motor, which is housed within the compressor.

Fig. 16 is a horizontal cross sectional view of a motor having magnet embedded structure.

A rotor 2c of the brush-less DC motor comprises permanent magnets 2e each provided at a predetermined position in an interior of a rotor core 2d, and flux short circuit prevention spaces 2g each of which elongates from an edge section of each permanent magnet 2d towards outer surface of the rotor core and prevents short circuit of flux of the permanent magnet 2d. Further, the magnet scattering prevention pipe is omitted. The brush-less DC motor having the above construction is referred to as a magnet embedded structure motor.

When the brush-less DC motor having the structure, scattering of permanent magnets is not the matter, therefore no magnet scattering prevention pipe is needed, so that a magnetic air gap can be made to be small between the stator 2a and the rotor 2c. Consequently, permeance at the magnet operation point can be improved. Further, demagnetization field from the stator 2a can be dispersed by disposing the permanent magnets 2e in the interior of the rotor core 2d, so that the permanent magnets can be strong against the demagnetization.

Therefore, the permanent magnets become strong against the demagnetization at high temperature.

Description is further made.

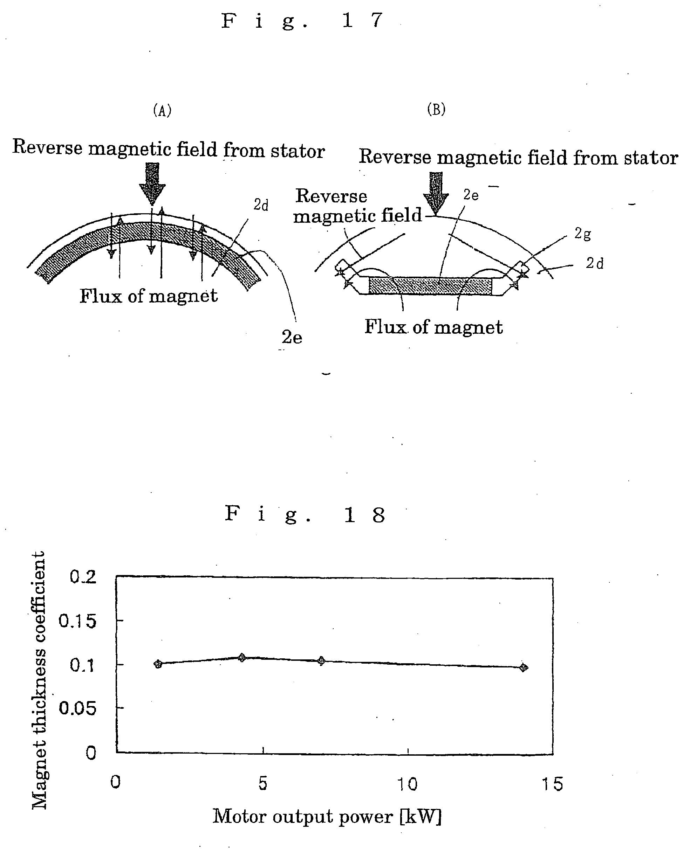

When the permanent magnets 2e are disposed on the surface of the rotor core 2d, demagnetization field from the stator side directly demagnetizes the permanent magnets 2e, as is illustrated in Fig. 17(A). When the permanent magnets 2e are disposed at predetermined positions in the interior of the rotor core 2e, flux of demagnetization field passes through portions within the rotor core other than the permanent magnets, as is illustrated in Fig. 17(B), so that flux of demagnetization field can be reduced which is applied directly to the permanent magnets 2e. Further, flux of the permanent magnets 2e also passes through portions within the rotor core other than the permanent magnets, so that the flux of the permanent magnets 2e can continuously be generated.

In the brush-less DC motor having the structure which is illustrated in Fig. 16, it is preferable that the thickness Wm (m) of the permanent magnet is determined to satisfy a formula of Wm / (D^{1/3} X L) > 0.11, wherein D (m) is a diameter of the rotor, and L (m) is a length of the rotor.

When the temperature in the interior of the compressor is increased, demagnetization at high temperature which is characteristic to rare earth magnets is generated, as has described above. The demagnetization at high temperature of the rare earth magnet is determined based upon material of magnet, and demagnetization field which is obtained by the permeance coefficient of a single magnet and the motor winding current. Therefore, for improving demagnetization characteristic at high temperature in a brush-less DC motor which is determined material of magnets, surface area, and permeance coefficient, that is in a brush-less DC motor determined its motor output, the thickness of the permanent magnet is increased, so that the permanent magnet becomes strong against demagnetization field which increases permeance coefficient of a single magnet. The permanent magnet becomes strong against demagnetization at high temperature. The size of the magnet should be determined as follows.

When an output is supposed to be N (kW), a rotation number is supposed to be n (rpm), and an output coefficient is supposed to be K, an output equation is expressed with N = K X D^{x} X L^{y} X n. Wherein, x and y satisfy the formulae of 2.0 < x < 3.0, and 1.0 < y < 1.5.

Therefore, the motor size is almost determined from the output. When a magnet thickness coefficient is expressed with Wm / (D1 / 3 X L) by taking this and used refrigerant into consideration, a variation of the magnet thickness coefficient with respect to the motor output becomes a variation which is illustrated in Fig. 18. Consequently, a compressor can be realized in which demagnetization of magnet is not generated, by determining the thickness of the magnet to satisfy the formula of Wm / (D^{1/3} X L) > 0.11.

It is preferable that the brush-less DC motor having the structure illustrated in Fig. 16 is driven so as to advance the motor driving current phase with respect to the motor induction voltage. It is also preferable that the brush-less DC motor is driven so as to use magnetic torque and reluctance torque together.

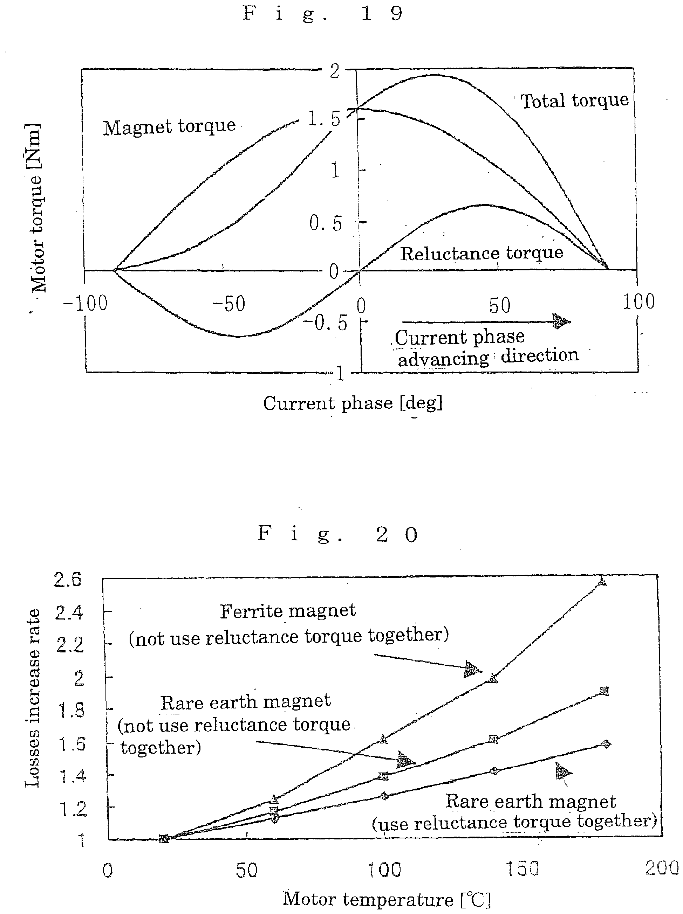

In this case, the torque due to magnet and the reluctance torque can be used together, as is illustrated in Fig. 19, high efficiency operation of the brush-less DC motor becomes possible which operation increases the torque / current ratio. Further, at the rotation number at which the motor induction voltage becomes greater than the inverter output voltage, the rotation number range can be enlarged by utilizing flux weakening effect.

A temperature characteristic of the magnet flux has a negative characteristic with respect to temperature. This means that the higher the temperature increases, the lower flux amount generated from the magnet becomes. Therefore, flux amount generated from the magnet is greatly decreased due to an inner temperature of a compressor which becomes high temperature, when the compressor employs R32 single refrigerant, or R32 rich mixed refrigerant in which R32 exceeds 50% and which has sending out refrigerant temperature higher than that of R22.

The magnet torque is generated by the flux due to the magnet and the motor current flowing in the winding. In the usage in which the interior of the compressor becomes high temperature, magnet flux is decreased and the motor current is increased. Further, the copper line constituting the winding is increased its electric resistance, consequently the copper loss is greatly increased.

Reluctance torque is generated by the electromagnet principles. The torque is affected by only the increase in electric resistance of a copper line used as the winding when the temperature is increased. That is, the more the reluctance torque is used, the less the increase in copper loss due to temperature increase is suppressed.

Therefore, the brush-less DC motor can be operated with more efficiency than that of the brush-less DC motor using only magnet torque, by using magnet torque and reluctance torque together when the temperature is high.

Losses at high temperature can be reduced when rare earth magnets are employed in comparison to a case that ferrite magnets are employed, usage temperature of magnets can be lowered, accordingly, as is illustrated in Fig. 20 which represents losses increase rate with respect to motor temperature. Losses at high temperature can further be reduced, and usage temperature of magnets can further be lowered, by advancing the motor driving current phase with respect to the motor induction voltage and using reluctance torque together.

It is preferable that the brush-less DC motor is driven so that the motor terminal voltage at the maximum rotation number is equal to or greater than the inverter output voltage, the brush-less DC motor having the structure illustrated in Fig. 16.

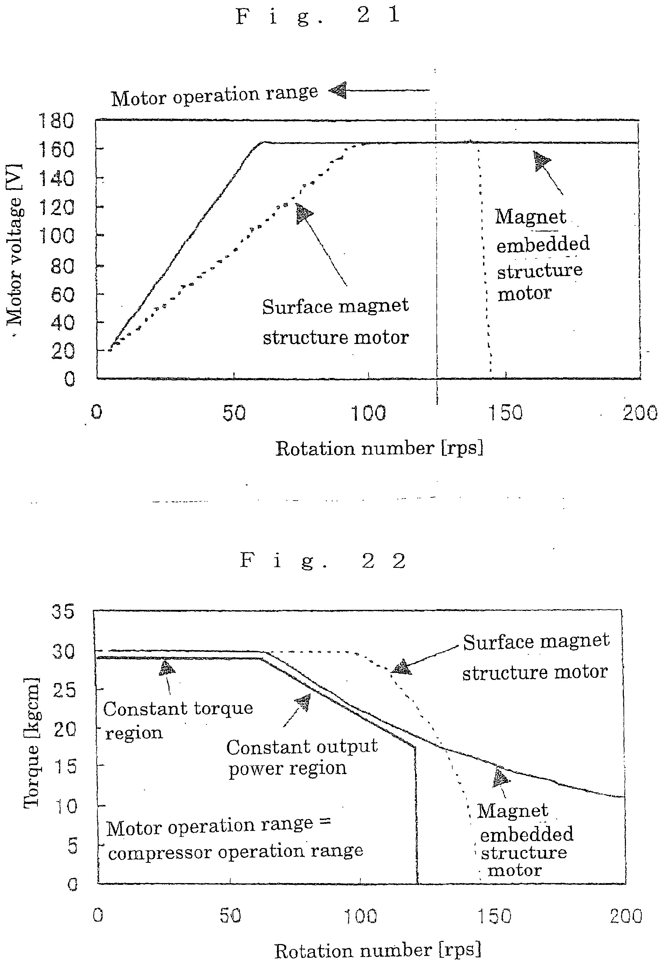

When the brush-less DC motor having magnets embedded in the interior of the rotor core, the magnet making the motor terminal voltage at the maximum rotation number is equal to or greater than the inverter output voltage, is used, magnet flux weakening driving is carried out by advancing the motor driving current phase with respect to the motor induction voltage at the rotation number where the motor terminal voltage is equal to the inverter output voltage, therefore the rotation number range can be enlarged while the voltage is maintained to be a constant voltage (refer to Fig. 21).

When the motor driving range and the compressor driving range are compared to one another, the comparison result becomes a comparison result illustrated in Fig. 22, under the assumption that flux amounts generated by magnets are the same to one another. Within the compressor driving range, a low torque region is required in low speed side, and a constant output region is required in high-speed side. When description is made by taking a compressor for an air conditioner as a sample, process advances in which the brush-less DC motor is rotated at high speed so as to increase the difference pressure, because there is no difference pressure (load) of the compression mechanism at the starting of the compressor. Thereafter, the rotation number is gradually decreased to maintain the maximum capacity when the difference pressure becomes greater to some degree.

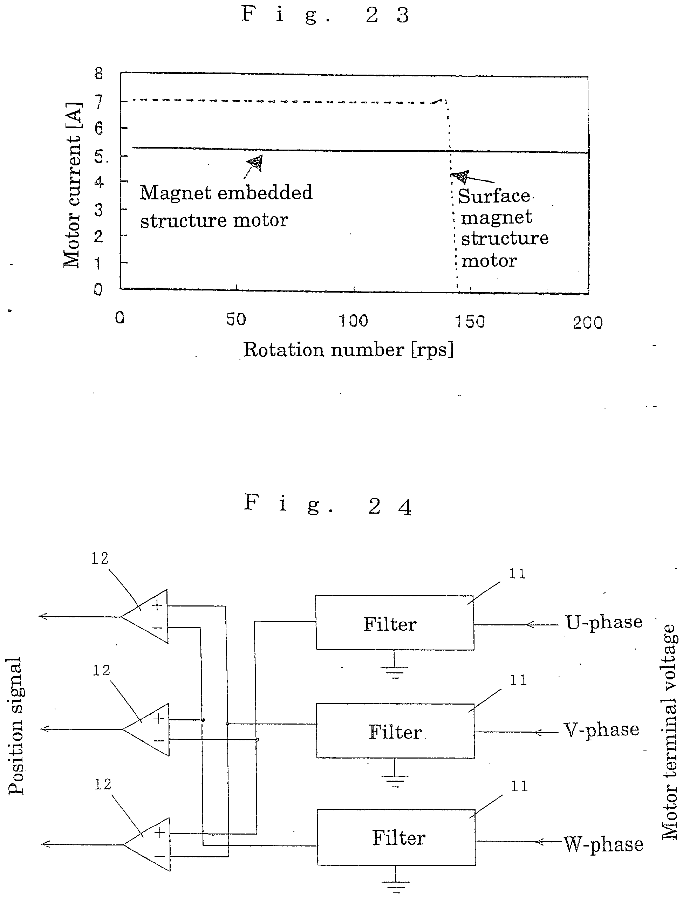

When the surface magnet structure motor for satisfying such driving range is employed, an excess range with respect to the necessary driving range of the compressor is required because only little constant output range can be obtained. As to the motor current in consequence, among motors in which flux is generated by the same magnets, the motor driving current can be decreased by employing the magnet embedded structure (refer to Fig. 23).

Therefore, the fact that the motor driving current can be reduced means that the demagnetization field against the magnet can be reduced. The limit temperature for using magnets can be increased, accordingly. In the compressor employing R32 single refrigerant, or R32 rich mixed refrigerant in which R32 exceeds 50% and which has sending out refrigerant temperature higher than that of R22, even when a motor cannot be used in surface magnet structure, the motor can be used by employing the magnet embedded structure.

It is preferable that the rotational position of the rotor is detected by the position sensor-less control for controlling the brush-less DC motor housed within the compressor of each of the above embodiments.

Fig. 24 is a block diagram illustrating a sensor-less position signal circuitry of an example.

This sensor-less position signal circuitry removes noise components and higher harmonics components by supplying the motor terminal voltages of U-phase, V-phase, and W-phase to filters 11, respectively, and outputs a position signal by supplying output signals from the arbitrary two filters 11 to comparators 12, respectively.

When the brush-less DC motor is controlled, the rotational position of the rotor should be detected and the inverter output voltages should be controlled. But, the interior of the compressor becomes high temperature and high pressure condition, so that it is difficult that sensors for detecting the rotational position of the rotor of the brush-less DC motor is housed within the compressor.

But, the brush-less DC motor can stably be driven even under high temperature and high-pressure condition by employing the sensor-less position signal circuitry illustrated in Fig. 24, for example. As a result, the rotor rotational position detection can be realized with a low cost and with high reliability without need of employment of sensors, which can resist against high temperature and high pressure.

It is possible that arrangement is made for detecting the motor induction voltages indirectly from the conduction condition of reflux diodes of the inverter section, instead detecting the motor induction voltages directly.

It is also possible that the rotational position of the rotor is detected using the motor neutral point signal.

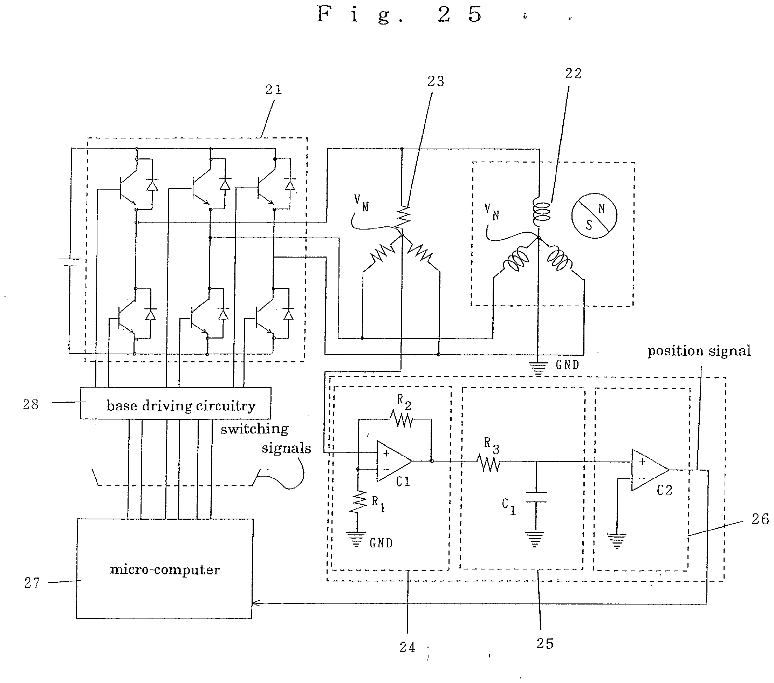

Fig. 25 is an electric circuitry diagram illustrating a sensor-less position signal circuitry of an example, which detects a rotational position of a rotor using a motor neutral point signal.

In this sensor-less position signal circuitry, Y-connection stator windings 22 and Y-connection resistances 23 are connected to output terminals of an inverter 21, And, a neutral point voltage of the Y-connection stator windings 22 and a neutral point voltage of the Y-connection resistances 23 are supplied to a differential amplifier 24 so as to obtain and amplify a difference voltage. This difference voltage is supplied to an integrator 25 so as to obtain an integration signal. This integration signal is supplied to a zero-cross comparator 26 so as to detect a zero-cross, thereby a rotational position detection signal of the rotor is obtained. This rotational position detection signal is supplied to a microcomputer 27 so that processing for controlling the inverter 21 is carried out. Switching signals are supplied to the inverter 21 through a base driving circuitry 28. Each switching component of the inverter 21 is controlled its switching operation. The processing in the microcomputer 27 is conventionally known, as is illustrated in Japanese Patent Laid-Open gazette No. Hei 7 - 337079, therefore detailed description is omitted.

When the sensor-less position signal circuitry having the arrangement illustrated in Fig. 25 is employed, detection of rotational position is realized for the entire extent of 180 ° interval in electric angle in principle, without affection of conduction period for applying inverter output voltages to the brush-less DC motor. Phase control can be carried out for the entire extent of 180° interval.

When the sensor-less position signal circuitry having the arrangement illustrated in Fig. 24 is employed, detection of rotational position can be carried out only within non-conduction period because the detection of rotational position is carried out using the motor induction voltages. Therefore, in normal operation, conduction is carried out for 120 ° interval, while detection of rotational position is carried out for remaining 60 ° interval. In principal, the phase can be changed only for 60 ° interval.

Therefore, it is preferable that the sensor-less position signal circuitry having the arrangement illustrated in Fig. 25 is employed. In this case, the conduction period is not limited at all, so that 150 ° conduction, sine wave conduction or the like can be realized, the circuitry contributes increasing in efficiency and decreasing in vibration of the brush-less DC motor. The circuitry can carry out control for freely advancing the motor driving current phase, so that further decreasing effect in motor driving current is realized.

It is possible that the rotational position of the rotor is calculated by performing a predetermined operation using stator application voltage, motor driving current, and equipment constants of the brush-less DC motor.

Description is further made.

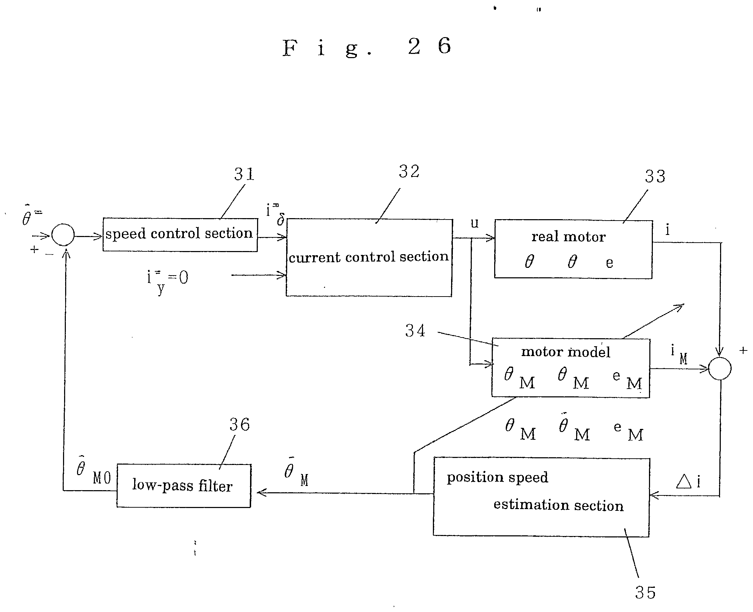

Figure 26 is a block diagram illustrating an arrangement of a speed control system of an example for carrying out the above processing.

This speed control system comprises a speed control section 31, current control section 32, real motor 33, motor model 34, position speed estimation section 35, and low-pass filter 36. The speed control section 31 carries out a predetermined processing (for example, P I operation) by receiving a difference between a speed command and γ - δ axes speed, and outputs a torque current command. The current control section 32 calculates application voltages based upon a reversed model of a motor by inputting the torque current command and an instruction for determining the γ - axis current to be 0, so that a real currents correspond to those current commands. The real motor 33 is applied the calculated voltages. The motor model 34 calculates model currents by carrying out operation based upon the motor model, which is input, the calculated voltages. The position speed estimation section 35 corrects the motor model by carrying out correction processing by inputting a difference between the real current and the model current so as to determine this difference to be 0, and outputs a position on γ - δ axes. The low-pass filter 36 inputs the position on γ - δ axes and outputs a γ - δ axes speed.

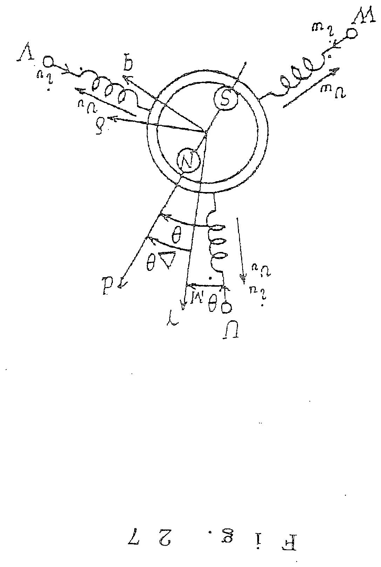

The motor model 34 is based upon an analysis model of the brush-less DC motor illustrated in Fig. 27.

When this speed control system is employed, the rotational position and speed of the rotor can be identified from estimated currents operated based upon an estimation position and an estimation speed electromotive force, and motor driving currents which are actually flowing (refer to "sensor-less brush-less DC motor control based upon current estimation error", Takeshita et al., T. IEE Japan, Vol.115 - D, No. 4, '95).

When the brush-less DC motor has salient-pole characteristic, winding inductance changes depending upon rotational position of the rotor so that estimation of rotational position becomes difficult. But, estimation of rotational position becomes possible by extending the motor model (numerical formula model of a motor) to a salient-pole type motor (refer to "sensor-less salient-pole type brush-less DC motor control based upon estimation of speed electromotive", Takeshita et al., T. IEE Japan, Vol.117 - D, No. 1, '97).

Also, in this case, the conduction period is not limited at all, so that 150 ° conduction, sine wave conduction or the like can be realized, the circuitry contributes increasing in efficiency and decreasing in vibration of the brush-less DC motor. The circuitry can carry out control for freely advancing the motor driving current phase, so that further decreasing effect in motor driving current is realized.

It is possible that the rotational position of the rotor is calculated by carrying out an operation based upon inductance obtained from higher harmonics currents generated by the voltage -fed inverter and the salient-pole characteristic of the rotor.

Description is made further.

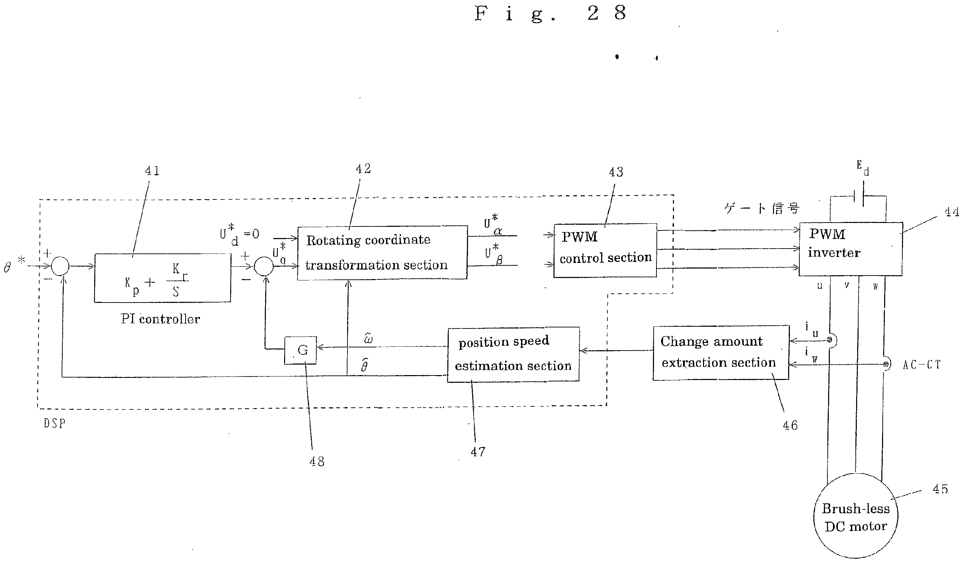

Fig. 28 is a block diagram illustrating a system arrangement of an example for carrying out the above processing.

This system comprises a PI controller 41, rotating coordinate transformation section 42, PWM control section 43, change amount extraction section 46, position speed estimation section 47, and feedback voltage calculation section 48. The PI controller 41 carries out a predetermined processing (for example, PI operation) by receiving a difference between a speed command and an estimation speed, so as to output a voltage command. The rotating coordinate transformation section 42 carries out rotating coordinate transformation by receiving the voltage command and an instruction which instruct to determine a d-axis voltage to be 0, so as to calculate voltages which are represented in stator coordinates. The PWM control section 43 carries out pulse width modulation (PWM) processing by receiving the calculated voltages so as to output gate signals which are supplied to a PWM inverter 44. The change amount extraction section 46 extracts a change amount of a current vector by receiving the output currents of two phases among the output currents of three phases which are supplied from the PWM inverter 44 to the brush-less DC motor 45. The position speed estimation section 47 estimates a rotational position of the rotor by carrying out a predetermined processing by receiving the extracted change amount of a current vector, and estimates a rotation speed from the difference of the estimated rotational position. The feedback voltage calculation section 48 outputs a voltage, which is to be fed back to the q-axis voltage by receiving the estimated rotational position.

When this system is employed, the higher harmonics components included within the motor terminal voltages are extracted by calculating the difference between the inverter average output voltage vector and each inverter output voltage vector, and the higher harmonics components included within the motor current vector are extracted by calculating the difference between the initial current vector and the last current vector of the modulation cycle within the predetermined period which corresponds to the modulation period, the inductance matrix which is unknowns can be obtained from the current equation corresponding to the higher harmonics component, the inductance corresponding to the rotational position can be obtained, the rotational position of the rotor can be estimated accordingly (refer to "position sensor-less IPM motor driving system using position estimating method based upon salient-pole characteristic", Ogasawara et al., T. IEE Japan, Vol. 118 - D, No. 5, '98).

Also, in this case, the conduction period is not limited at all, so that 150 ° conduction, sine wave conduction or the like can be realized, the circuitry contributes increasing in efficiency and decreasing in vibration of the brush-less DC motor. The circuitry can carry out control for freely advancing the motor driving current phase, so that further decreasing effect in motor driving current is realized.

## Claims

1. A compressor employing CH₂F₂ (R32) as a single refrigerant, or CH₂F₂ (R32) as a rich mixed refrigerant in which CH₂F₂ (R32) exceeds 50%, wherein the compressor has a sending out refrigerant temperature which is higher than that if CHClF₂ (R22) is used as refrigerant, said compressor comprises a brush-less DC motor (2) as a driving source, wherein
the brush-less DC motor (2) includes a rotor (2c) having rare earth magnets (2e),
wherein the rare earth magnets (2e) are embedded within the rotor (2c), and a thickness of the rare earth magnets (2e) is determined to satisfy a formula of Wm / (D^{1/3} X L) > 0.11 wherein a diameter of the rotor (2c) is D (m), a length of the rotor (2c) is L (m), and a thickness of the rare earth magnets (2e) is Wm (m).

2. A compressor as set forth in claim 1, further comprising an inverter for driving the brush-less DC motor (2), wherein a motor terminal voltage at the maximum rotation number is determined to be equal to or greater than an inverter output voltage.

3. A compressor as set forth in claim 1 or 2, which uses magnet torque and reluctance torque together.

4. A compressor as set forth in claims 1 - 3, further comprising brush-less DC motor control means, which drives the brush-less DC motor (2) by advancing motor driving current phase more than motor induction voltage phase.

5. A compressor as set forth in one of claims 1 - 4, further comprising an inverter for driving the brush-less DC motor (2), and rotational position sensor-less detection means for detecting a rotational position of the rotor (2c) of the brush-less DC motor (2) based upon an induction voltage of the brush-less DC motor (2) or based upon a neutral point signal of the brush-less DC motor (2),
and wherein the inverter operates based upon the rotational position of the rotor (2c) detected by the rotational position sensor-less detection means.

6. A compressor as set forth in one of claims 1 - 4, further comprising a voltage-fed inverter for driving the brush-less DC motor (2), and rotational position sensor-less detection means for detecting a rotational position of the rotor (2c) of the brush-less DC motor (2) from inductance obtained from higher harmonic current generated from the voltage-fed inverter and salient pole character, and wherein the inverter operates based upon the rotational position of the rotor (2c) detected by the rotational position sensor-less detection means.

7. A compressor as set forth in one of claims 1 - 4, further comprising an inverter for driving the brush-less DC motor (2), and rotational position sensor-less detection means for detecting a rotational position of the rotor (2c) of the brush-less DC motor (2) by carrying out predetermined operation using stator application voltages, motor currents, and equipment constants,
and wherein the inverter operates based upon the rotational position of the rotor (2c) detected by the rotational position sensor-less detection means.

## Patentansprüche

1. Kompressor, verwendend CH₂F₂ (R32) als ein Einzelkältemittel, oder als ein CH₂F₂ (R32) - reiches Mischkältemittel, in dem CH₂F₂ (R32) mehr als 50% beträgt, wobei der Kompressor eine ausgesendete Kältemitteltemperatur hat, die höher ist als die, wenn CHClF₂ (R22) als Kältemittel verwendet wird, der Kompressor einen bürstenlosen Gleichstrommotor (2) als Antriebsquelle umfasst, wobei
der bürstenlose Gleichstrommotor (2) einen Rotor (2c) mit Seltenerd-Magneten (2e) aufweist,
wobei die Seltenerd-Magnete (2e) im Rotor (2c) eingebettet sind, und eine Dicke der Seltenerd-Magneten (2e) bestimmt wird, um eine Formel von Wm / D^{1/3} X L) > 0,11 zu erfüllen, wobei ein Durchmesser des Rotors (2c) D (m) ist, eine Länge des Rotors (2c) L (m) ist, und eine Dicke des Seltenerd-Magneten (2e) Wm (m) ist.

2. Kompressor gemäß Anspruch 1, ferner umfassend einen Inverter zum Antreiben des bürstenlosen Gleichstrommotors (2), wobei eine Motorklemmenspannung bei der maximalen Drehzahl so bestimmt wird, dass sie gleich oder größer als eine Inverter-Ausgangsspannung ist.

3. Kompressor gemäß Anspruch 1 oder 2, welcher Magnetmoment und Reluktanzmoment zusammen verwendet.

4. Kompressor gemäß der Ansprüche 1-3, ferner umfassend eine bürstenlose Gleichstrommotorsteuereinrichtung, welche den bürstenlosen Gleichstrommotor (2) durch mehr Voranbringen der Motorantriebsstromphase als der Motorinduktionsspannungsphase antreibt.

5. Kompressor gemäß irgendeinem der Ansprüche 1-4, ferner umfassend einen Inverter zum Antreiben des bürstenlosen Gleichstrommotors (2), und eine sensorlose Drehlageerfassungseinrichtung zum Erfassen einer Drehlage des Rotors (2c) des bürstenlosen Gleichstrommotors (2) auf Grundlage einer Induktionsspannung des bürstenlosen Gleichstrommotors (2), oder auf Grundlage eines Neutralpunktsignals des bürstenlosen Gleichstrommotors (2),
und wobei der Inverter auf Grundlage der von der sensorlosen Drehlageerfassungseinrichtung erfassten Drehlage des Rotors (2c) arbeitet.

6. Kompressor gemäß einem der Ansprüche 1-4, ferner umfassend einen spannungsgespeisten Inverter zum Antreiben des bürstenlosen Gleichstrommotors (2), und eine sensorlose Drehlageerfassungseinrichtung zum Erfassen einer Drehlage des Rotors (2c) des bürstenlosen Gleichstrommotors (2), erhalten aus einer Induktivität aus höherem Oberschwingungsstrom, erzeugt von dem spannungsgespeisten Inverter und ausgeprägtem Polcharakter, und wobei der Inverter auf Grundlage der Drehlage des Rotors (2c) arbeitet, erfasst von der sensorlosen Drehlageerfassungseinrichtung.

7. Kompressor gemäß einem der Ansprüche 1-4, ferner umfassend einen Inverter zum Antreiben des bürstenlosen Gleichstrommotors (2), und eine sensorlose Drehlageerfassungseinrichtung zum Erfassen einer Drehlage des Rotors (2c) des bürstenlosen Gleichstrommotors (2) durch Ausführen eines vorbestimmten Betriebs unter Verwendung von Statoranwendungsspannungen, Motorströmen und Gerätekonstanten,
und wobei der Inverter auf Grundlage der von der sensorlosen Drehlageerfassungseinrichtung erfassten Drehlage des Rotors (2c) arbeitet.

## Revendications

1. Compresseur employant du CH₂F₂ (R32) en tant que fluide frigorigène unique, ou du CH₂F₂ (R32) en tant que fluide frigorigène mixte riche dans lequel le CH₂F₂ (R32) dépasse 50 %, dans lequel le compresseur a une température de fluide frigorigène d'envoi qui est plus élevée que celle dans le cas où le CHClF₂ (R22) est utilisé en tant que fluide frigorigène, ledit compresseur comprend un moteur à courant continu sans balais (2) en tant que source d'entraînement, dans lequel
le moteur à courant continu sans balais (2) comporte un rotor (2c) ayant des aimants à base de terres rares (2e),
dans lequel les aimants à base de terres rares (2e) sont incorporés au sein du rotor (2c), et une épaisseur des aimants à base de terres rares (2e) est déterminée pour satisfaire la formule Wm/ (D^{1/3} X L) > 0,11, dans lequel un diamètre du rotor (2c) est D (m), une longueur du rotor (2c) est L (m), et une épaisseur des aimants à base de terres rares (2e) est Wm (m).

2. Compresseur selon la revendication 1, comprenant en outre un onduleur pour entraîner le moteur à courant continu sans balais (2), dans lequel une tension aux bornes du moteur au nombre de rotations maximal est déterminée pour être supérieure ou égale à une tension de sortie d'onduleur.

3. Compresseur selon la revendication 1 ou 2, qui utilise un couple d'aimant et un couple de réluctance ensemble.

4. Compresseur selon les revendications 1 à 3, comprenant en outre un moyen de commande de moteur à courant continu sans balais, qui entraîne le moteur à courant continu sans balais (2) en faisant avancer davantage une phase de courant d'entraînement de moteur qu'une phase de tension d'induction de moteur.

5. Compresseur selon l'une des revendications 1 à 4, comprenant en outre un onduleur pour entraîner le moteur à courant continu sans balais (2), et un moyen de détection sans capteur de position de rotation pour détecter une position de rotation du rotor (2c) du moteur à courant continu sans balais (2) sur la base d'une tension d'induction du moteur à courant continu sans balais (2) ou sur la base d'un signal de point neutre du moteur à courant continu sans balais (2),
et dans lequel l'onduleur fonctionne sur la base de la position de rotation du rotor (2c) détectée par le moyen de détection sans capteur de position de rotation.

6. Compresseur selon l'une des revendications 1 à 4, comprenant en outre un onduleur alimenté en tension pour entraîner le moteur à courant continu sans balais (2), et un moyen de détection sans capteur de position de rotation pour détecter une position de rotation du rotor (2c) du moteur à courant continu sans balais (2) à partir d'une inductance obtenue d'un courant d'harmonique plus élevée généré par l'onduleur alimenté en tension et d'un caractère de pôle saillant, et dans lequel l'onduleur fonctionne sur la base de la position de rotation du rotor (2c) détectée par le moyen de détection sans capteur de position de rotation.

7. Compresseur selon l'une des revendications 1 à 4, comprenant en outre un onduleur pour entraîner le moteur à courant continu sans balais (2), et un moyen de détection sans capteur de position de rotation pour détecter une position de rotation du rotor (2c) du moteur à courant continu sans balais (2) en réalisant un fonctionnement prédéterminé à l'aide de tensions d'application de stator, de courants de moteur, et de constantes d'équipement,
et dans lequel l'onduleur fonctionne sur la base de la position de rotation du rotor (2c) détectée par le moyen de détection sans capteur de position de rotation.
